# EUROPÄISCHE PATENTSCHRIFT

(11) **EP 3 280 242 B1**
(45) Veröffentlichungstag und Bekanntmachung des Hinweises auf die Patenterteilung: **12.02.2020**
(21) Anmeldenummer: 16713490.7
(22) Anmeldetag: 04.04.2016
(51) Int. Cl.: A01B 49/06, A01C 23/02

(54) **BODENBEARBEITUNGSSYSTEM**
SOIL-WORKING SYSTEM
SYSTÈME DE TRAVAIL DU SOL

(30) Priorität: 07.04.2015 DE 102015105237
(43) Veröffentlichungstag der Anmeldung: 14.02.2018
(73) Patentinhaber: Betek GmbH & Co. KG, 78733 Aichhalden (DE); Kuhn Huard S.A., 44142 Chateaubriant (FR)
(72) Erfinder: SMEETS, Florian, 72270 Baiersbronn (DE); KRÄMER, Ulrich, 77709 Wolfach (DE); SEIFRIED, Fabian, 78662 Herrenzimmern (DE); AUDAS, Guillaume, 44110 Chateaubriant (FR)
(74) Vertreter: Herrmann, Jochen
(86) Internationale Anmeldenummer: PCT/EP2016/057365
(87) Internationale Veröffentlichungsnummer: WO 2016/162311

(56) Entgegenhaltungen:
- AU-B2- 500 515
- US-A- 3 259 087
- US-A- 4 132 181
- US-A- 4 355 589
- US-A- 5 865 131
- US-B1- 6 178 900

## Beschreibung

Die Erfindung betrifft ein Bodenbearbeitungssystem für eine landwirtschaftliche Bodenbearbeitungsmaschine, umfassend ein Basiselement zur Aufnahme eines Sohlenelementes, wobei das Sohlenelement wenigstens ein Schneidelement aufweist, und ein Injektionselement zum Eintrag von Substanzen in das zu bearbeitende Bodenmaterial, wobei das Bodenbearbeitungssystem lösbar mit einem Trägerelement, insbesondere mit einem Zinken einer landwirtschaftlichen Maschine in Verbindung steht, wobei die lösbaren Verbindungen einen Form- und/oder Kraftschluss bilden und wobei die Elemente wenigstens teilweise einen Schutz vor abrasivem Verschleiß zueinander bilden.

Aus dem Stand der Technik sind eine Vielzahl von unterschiedlichen Systemen zur Bodenbearbeitung mit einem Injektionselement für eine landwirtschaftliche Bodenbearbeitungsmaschine bekannt. Derartige Systeme weisen oftmals einen aufwendigen, mechanischen Aufbau auf, welcher im Einsatz des Bodenbearbeitungssystems einen zeit- und kostenaufwendigen Austausch der jeweiligen Elemente aufgrund eines abrasiven Verschleißes der einzelnen Elemente erfordert.

Darüber hinaus weisen die einzelnen Elemente des Bodenbearbeitungssystems teilweise Abmessungen bzw. Formgestaltungen auf, welche einem nachteiligem Verschleiß ausgesetzt sind.

Aus US 4,355,589 ist ein Bodenbearbeitungswerkzeug bekannt, welches einen Schaft aufweist. An dem Schaft ist vorderseitig ein Schneidelement, bestehend aus einem Hartstoff-Einsatz festgemacht. Rückseitig trägt der Schaft ein Injektionsrohr. Ein ähnliches Bodenbearbeitungswerkzeug geht auch aus US 3,259,087 als bekannt hervor.

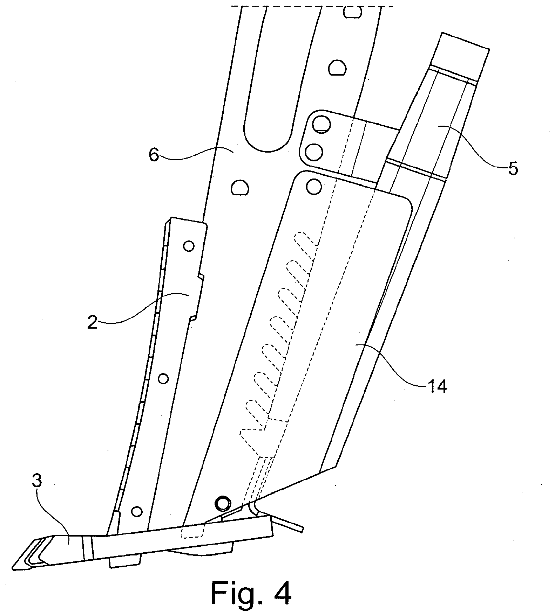

In US 5,865,131 ist ein Bodenbearbeitungswerkzeug beschrieben, das an einem Grindel einer Bodenbearbeitungsmaschine angebaut werden kann. Im Einzelnen ist dabei eine Werkzeugeinheit vorgesehen, die an einem Grundkörper seitliche Scharflügel trägt. Der Grundkörper weist in Vorschubrichtung vor den beiden Scharflügel einen Schneidenteil mit einer Schneidplatte auf. Der Grundkörper ist gemäß Figur 4A mit einem Vorsprung versehen, der formschlüssig in eine Kerbe des Grindels eingreift. An den Grundkörper sind seitlich zwei Platten angeschweißt, die entgegengesetzt zur Vorschubrichtung vorstehen und den Grindel an gegenüberliegenden Seiten übergreifen mittels einer Schraube, die durch Schraubaufnahmen der Platten hindurchgeführt sind, lässt sich die Werkzeugeinheit mit dem Grindel verschrauben. Es ist weiterhin ein frontseitiges Schutzelement vorgesehen, welches ebenfalls an dem Grindel angebaut werden kann. Zu diesem Zweck besitzt das Grindel seitliche Laschen, mittels denen das Schutzelement verschraubt werden kann. Im Fußbereich des Schutzelements ist ein Vorsprung vorgesehen. Dieser Vorsprung greift formschlüssig in eine Ausnehmung des Grundkörpers ein.

Es ist Aufgabe der Erfindung, ein Bodenbearbeitungssystem der eingangs erwähnten Art bereit zu stellen, welches die Nachteile der aus dem Stand der Technik bekannten Bodenbearbeitungssysteme beseitigt.

Die Aufgabe der Erfindung wird mit den Merkmalen des Anspruchs 1 gelöst. Das erfindungsgemäße Bodenbearbeitungssystem weist einen modularen Aufbau auf, welcher einen abrasiven Verschleiß der Elemente deutlich vermindert.

Vorzugsweise bildet jedes Element aufgrund seiner Abmessungen einen Schutz für das in Fließrichtung jeweils nachfolgende Element des Bodenbearbeitungssystems, wobei die Formgestaltungen der einzelnen Elemente gezielt aufeinander abgestimmt sind.

Die Erfindung wird im Folgenden anhand eines in den Zeichnungen dargestellten Ausführungsbeispiels naher erläutert:

Es zeigen:
Fig. 1 die Darstellung eines Bodenbearbeitungssystems in Seitenansicht mit einem Basiselement, einem Sohlenelement, einem Trägerelement und einem Injektionselement;
Fig. 2 die Darstellung des Bodenbearbeitungssystems gemäß Fig. 1 in einer Hauptansicht;
Fig. 3 die Darstellung eines Bodenbearbeitungssystems in einer perspektivischen Ansicht;
Fig. 4 die Darstellung des Bodenbearbeitungssystems gemäß Fig. 3 in einer perspektivischen Darstellung;
Figuren 5 und 6 ein nicht erfindungsgemäßes Bodenbearbeitungswerkzeug für ein Bodenbearbeitungssystem in verschiedenen perspektivischen Ansichten und
Figur 7 eine Flügelelement zur Verwendung an dem Bodenbearbeitungswerkzeug gemäß den Figuren 5 und 6 in Draufsicht.

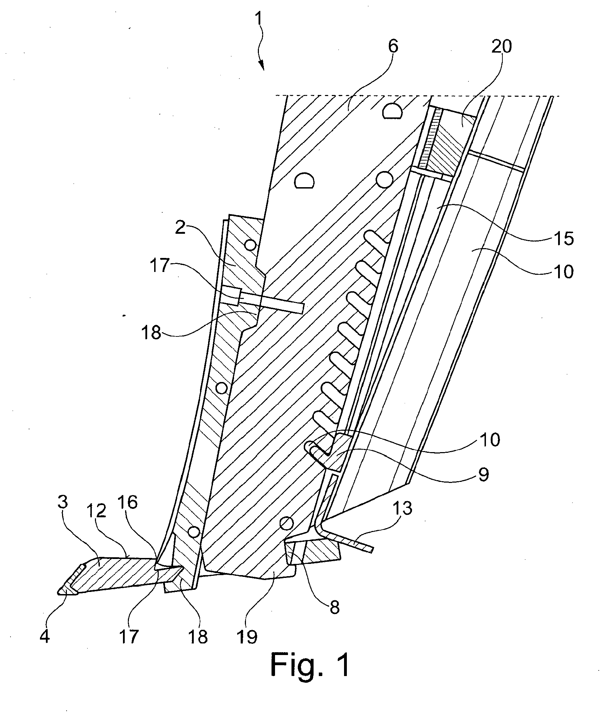

In Fig. 1 ist ein erfindungsgemäßes Bodenbearbeitungssystem 1 dargestellt, wobei das Bodenbearbeitungssystem 1 eine Basiselement 2, eine Sohlenelement 3 und ein Injektionselement 5 umfasst, welche Elemente 2, 3, 5 an einem Trägerelement 6 einer Bodenbearbeitungsmaschine über lösbare Verbindungen angeordnet.

Die lösbaren Verbindungen des Bearbeitungssystems 1 sind als form- und/oder kraftschlüssige Verbindungen ausgebildet, wobei das Basiselement 2 mittels einer zusätzlichen Schraubverbindung 17 im entgegen zur Bodenoberfläche weisenden Endbereich an dem Trägerelement 6 angeordnet ist.

Das Basisteil weit auf seiner entgegen zur Bearbeitungsrichtung des Bodenbearbeitungssystems 1 weisenden Oberfläche wenigstens einen Vorsprung 18 und/oder wenigstens eine Vertiefung auf, welche mit der entsprechend auf der gegenüberliegenden Oberfläche gebildeten wenigstens einen Vertiefung und/oder wenigstens einen Vorsprung im form- und/oder kraftschlüssigen Eingriff stehen. Eine weitere Ausführungsform des Basiselementes 2 kann auf der entgegen zur Bearbeitungsrichtung weisenden Oberfläche zwei vorzugsweise horizontal verlaufende Stege in den seitlichen Endbereichen des Basiselementes 2 aufweisen, welche das Trägerelement 6 seitlich umgreifen und/oder in entsprechend auf der Oberfläche des Trägerelementes 6 ausgebildeten Vertiefungen eingreifen. Weitere form- und/oder kraftschlüssige Verbindungen zwischen dem Basiselement 3 und dem Trägerelement 6, welche auf dem Schlüssel-/Schloss-Prinzip basieren sind möglich.

Das Sohlenelement 3 weist auf seiner in Bearbeitungsrichtung weisenden Oberfläche wenigstens ein Schneidelement 4 auf, welches die in Bearbeitungsrichtung weisende Spitze des Sohlenelementes 3 winkelförmig umschließt und einen herausragenden Schutz vor abrasiven Verschleiß bildet. Auf der in Fließrichtung des Bodenmaterials folgenden Oberfläche des Sohlenelementes 3 ist vorzugsweise wenigstens ein Schutzelement 12 zum ergänzenden Schutz vor abrasiven Verschleiß angeordnet.

Das Sohlenelement 3 ist auf der zur Bodenoberfläche weisenden Oberfläche von einer Ausnehmung 8 durchbrochen, wobei die Ausnehmung 8 in vorteilhafter Weise einen Absatz 17 aufweist, welcher von einem hakenförmig ausgebildeten Endbereich 18 des die Ausnehmung 8 durchgreifenden Basiselementes 3 umschlossen ist und eine form- und kraftschlüssige Verbindung und Abstützung bildet.

Zusätzlich steht die Ausnehmung 8 des Sohlenelementes 3 mit einem am Trägerelement 6 hakenförmig ausgebildeten Endbereich 19 im form- und/oder kraftschlüssigen Eingriff, wobei das Umschließen der hakenförmigen Endbereiche 17, 18 des Basiselementes 2 und des Trägerelementes 6 insgesamt eine form- und/oder kraftschlüssige Abstützung der Elemente 2, 6 bildet, welche durch die nach dem Schlüssel-/Schloss-Prinzip ausgebildete Verbindung zwischen dem Basiselement 2 und dem Trägerelement 6 zusätzlich verliersicher arretiert wird.

In der entgegen zur Bearbeitungsrichtung weisenden Richtung ist fluchtend zum Trägerelement 6 eine Injektionselement 5 angeordnet, welches zur Einleitung von Injektionssubstanzen, beispielsweise Dünger oder Saatgut, ausgebildet ist.

Das Injektionselement 5 weist vorzugsweise an seinem in Bodenoberfläche weisenden Endbereich ein winkelförmiges Leitelement 13 auf welches in einer ersten Funktion einen Schutz vor eindringendem Bodenmaterial in das Injektionselement 5 bildet, und in einer zweiten Funktion eine verbesserte Verteilung der über das Injektionselement 5 in den bearbeiteten Boden eingeleiteten Substanz bildet.

Das Injektionselement 5 weist in der hier dargestellten Ausführungsform auf seiner im bodennahen Endbereich liegenden Oberfläche wenigstens ein hakenförmiges Befestigungselement 9 auf, welches mit wenigstens einer im Trägerelement 6 ausgebildeten Aufnahme 8 in form- und kraftschlüssigen Eingriff steht.

Aufgrund von einer Mehrzahl gebildeter Aufnahmen 8 ist der Abstand zwischen der Bodenoberfläche und dem Injektionselement 5 variabel einstellbar.

Nach Anordnung des Injektionselementes 5 an dem Trägerelement 6 ist eine zusätzliche lösbare Abstützung und Befestigung mittels eines Verbindungselementes 20 durchführbar, wobei die Verbindung dieser beiden Elemente 6, 20 auch als form- und kraftschlüssige Verbindung ausführbar ist.

Darüber hinaus ist für eine verbesserte Abstützung des Injektionselementes 5 die Anordnung eines keilförmigen Abstands- und Stabilisierungselementes 15 möglich. Aufgrund des relativ großen Abstandes zwischen der Bodenoberfläche und der Verbindungsanordnung 17 zwischen dem Basisteil 2 und Trägerteil 6 kann ein unerwünschtes Lösen des Basiselementes 2 zusammen mit dem Sohlenelement 3 aufgrund eines abrasiven Verschleißes eines im Bodenmaterial eingetauchten Bodenbearbeitungssystems 1 vermieden werden.

Weiterhin ist in der hier dargestellten Ausführungsform eines Bodenbearbeitungssystems 1 ein zusätzlicher Schutz der Oberflächenkante 16 im Endbereich des Trägerelementes gebildet, in dem das entgegen der Bearbeitungsrichtung und Bodenoberfläche weisende Ende des Schneidelementes 4 eine Abstand zur Bodenoberfläche aufweist, welcher gleich, vorzugsweise größer als der Abstand zwischen Bodenoberfläche und der im Sohlenelement 3 eintauchenden Oberflächenkante 16 des Basiselementes 2 ist. Hierdurch wird die Oberflächenkante von dem Ende des Schneidelementes 4 in horizontaler Ebene überdeckt, wodurch diese vor einem abrasiven Verschleiß zusätzlich geschützt wird und ein vorzeitiges Lösen der Basiselementes 2 vermieden werden kann.

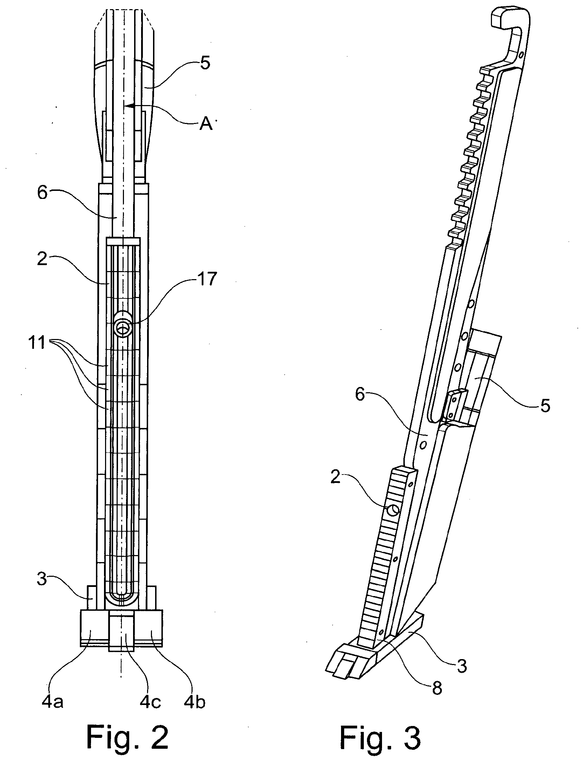

In der Fig. 2 und in der Fig.3 wird jeweils eine erfindungsgemäße Ausführungsform des Bodenbearbeitungselementes gezeigt, wobei das Basiselement 2 mit dem Trägerelement 6 gekoppelt ist und auf seiner in Bearbeitungsrichtung weisenden Oberfläche mehrere aufeinander folgende Schutzelemente 11 aufweist. Die Anordnung und die Form der Schutzelemente 11 sind variabel, wobei die Ausführungsform einteilig und/oder mehrteilig ausführbar ist.

Das Schneidelement 4 ist in der hier dargestellten Ausführungsform mehrteilig ausgebildet, wobei die mehrteiligen Schneidelemente 4a, 4b, 4c horizontal eine Ebene bilden und in ihrer Draufsicht versetzt zueinander angeordnete Ebenen bilden. Dabei sind die Schneidelemente 4a, 4b, 4c in horizontaler Ebene und in ihrer sich ergebenden Lage in der Draufsicht variabel anordenbar, je nach Beschaffenheit des Bodenmaterials.

In der Fig. 4 wird eine perspektivische Ansicht des erfindungsgemäßen Bodenbearbeitungssystem 1 gezeigt wobei in der hier dargestellten Ansicht das Bodenbearbeitungswerkzeug ein Schutz- und Stabilisierungselement 14 seitlich am Trägerelement 6 angeordnet ist und das entgegen zur Bearbeitungsrichtung mit dem Trägerelement 6 in Verbindung stehende Injektionselement 5 vor einem abrasiven Verschleiß schützt.

Dabei ist das Schutz- und Stabilisierungselement vorzugsweise lösbar (auch mittels einer form-/kraftschlüssigen Verbindung) mit dem Trägerelement 6 verbunden.

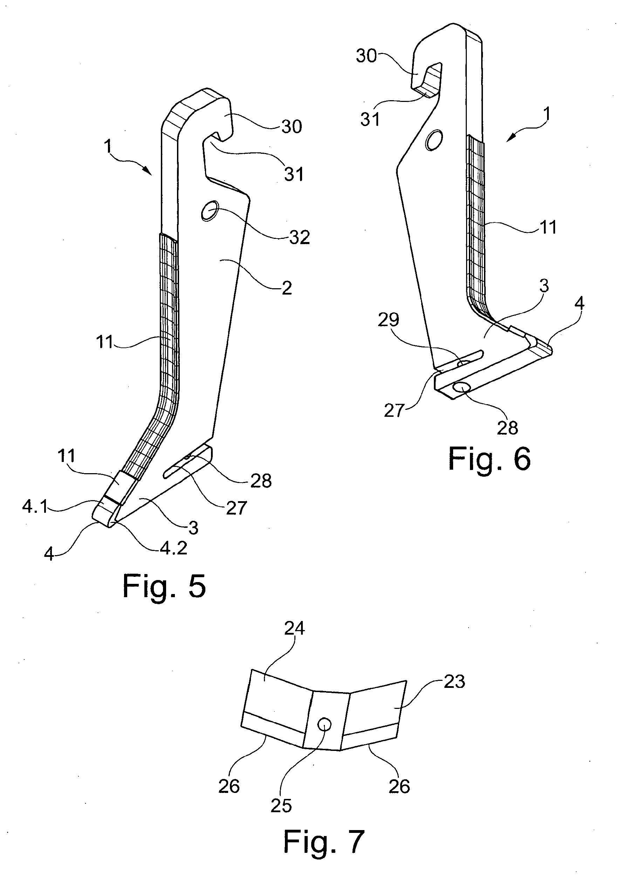

In den Figuren 5 und 6 ist ein nicht erfindungsgemäßes Bodenbearbeitungswerkzeug gezeigt, dass mit einem Trägerelement 6 (in der Zeichnung nicht dargestellt) verbunden werden kann. Das Bodenbearbeitungswerkzeug weist einen Basiselement 2 auf, an das einteilig ein Sohlenelement 3 angeformt ist. Das Sohlenelement 3 trägt an seiner in Vorschubrichtung zugewandten Vorderseite ein Schneidelement 4. Das Schneidelement 4 ist wieder ähnlich aufgebaut, wie die Schneidelemente 4 gemäß den Ausführungsbeispielen nach den Figuren 1-4. Entsprechend besitzt das Schneidelement 4 einen Befestigungsabschnitt 4.1, der entgegengesetzt zur Vorschubrichtung in einen Stützabschnitt 4.2 übergeht. Das Schneidelement 4 ist mit dem Sohlenelement 3 unter Vermittlung einer Lotschicht verbunden. Dabei ist die Lotschicht im Übergangsbereich zwischen dem Befestigungselement 4.1 und dem Stützabschnitt 4.2 zu dem Sohlenelement 3 angeordnet. Das Schneidelement 4 kann aus Hartmetall bestehen und weist damit besondere Standzeiten auf. Dadurch, dass zwischen dem Sohlenelement 3 und dem Befestigungsabschnitt 4.1 und dem Stützabschnitt 4.2 eine vermittelnde Lotschicht angeordnet ist, wird effektiv die Bruchgefahr für das Schneidelement 4 aufgrund der vollflächigen Unterstützung verringert.

Im Anschluss an das Schneidelement 4 ist auf das Sohlenelement 3 ein Schutzelement 11 aufgebracht. Das Schutzelement 11 besteht vorzugsweise aus Hartmetall und ist als plattenförmiges Element ausgeführt. Dabei schließt sich das Schutzelement 11 vorzugsweise abstandslos an das Schneidelement 4 an. Auf diese Weise wird ein Auswaschen des Übergangsbereichs zwischen dem Schneidelement 4 und dem Schutzelement 11 hier verhindert. Dies ist insbesondere an dieser Stelle von besonderer Bedeutung, da während des Werkzeugeinsatzes infolge der hohen Kompression des Erdreiches dies eine besonders verschleißgefährdete Stelle darstellt. Wie Figur 5 weiter zeigt, ist im Anschluss an das plattenförmige Schutzelement 11 eine Reihe weiterer Schutzelemente 11 angebracht. Die Schutzelemente 11 sind dabei ebenfalls vorzugsweise abstandslos aneinandergereiht um ein Auswaschen zu verhindern. Die Schutzelemente 11 weisen im Querschnitt eine rinnenförmige Geometrie auf, sodass ein verbesserter Bodenfluss erreicht ist. Rückseitig, entgegengesetzt zur Vorschubrichtung ist in das Sohlenelement 3 eine Flügelaufnahme 27 eingearbeitet. Die Flügelaufnahme 27 ist vorliegend als schlitzförmige Ausnehmung ausgeführt. In die Flügelaufnahme 27 kann ein Flügelelement eingeschoben werden, wie es in Figur 7 dargestellt ist. Wie diese Darstellung näher veranschaulicht, besitzt das Flügelelement einen zentralen Anschlussbereich, der mit einer Schraubaufnahme 25 versehen ist. An den Anschlussbereich schließen sich beidseitig Flügel 23,24 an. Die beiden Flügel können, wie vorliegend V-förmig zueinander angestellt sein. Die Flügel 23,24 weisen an ihrer in Vorschubrichtung vorderen Seite eine Schneide 26 auf. Zur Montage des Flügelelements wird dieses von hinten in die Flügelaufnahme 27 eingesteckt. Im montierten Zustand steht die Schraubaufnahme 25 in Flucht zu einer Schraubaufnahme 28 des Sohlenelements 3. Diese Schraubaufnahme 28 ist in Figur 6 gut erkennbar. Weiterhin stehen die beiden Schraubaufnahmen 25 und 28 in Flucht zu einer Gewindeaufnahme 29, die in das Sohlenelement 3 eingeschnitten ist. Durch die beiden Schraubaufnahmen 25 und 28 kann eine Schraube hindurchgeführt und in die Gewindeaufnahme 29 eingeschraubt werden. Wie Figur 6 erkennen lässt, ist die Schraubaufnahme 28 derart ausgeführt, dass sie den Schraubenkopf versenkt aufnimmt um ihn vor dem abrasiven Angriff des Bodenmaterials zu schützen. Wenn die Schraube angezogen wird, so ist vorzugsweise die Ausführung des Bodenbearbeitungswerkzeuges derart, dass der die Schraubaufnahme 28 tragende Vorsprung infolge der Schraubkraft federelastisch ausgelenkt werden kann. Damit wird das Flügelelement zusätzlich zu der Schraubverbindung auch in der schlitzförmigen Flügelaufnahme 27 verspannt.

Wie die Figuren 5 und 6 weiter erkennen lassen, ist an das Sohlenelement 3 das Basiselement 2 einstückig angeformt. Das Basiselement 2 weist auf seiner dem Sohlenelement 3 abgewandten Seite eine Halteraufnahme auf, die vorliegend insbesondere als Hakenaufnahme 31 ausgeführt sein kann. Entsprechend wird die Hakenaufnahme 31 von einem Befestigungsabschnitt 30 begrenzt. Zur Montage des in den Figuren 5 und 6 dargestellten Bodenbearbeitungswerkzeuges, wird dieses mit der Hakenaufnahme 31 an einen Haken eines Trägerelements 6, insbesondere an einen Grindel angehangen. Dabei stützt sich das Bodenbearbeitungswerkzeug an dem Haken entgegengesetzt zur Vorschubrichtung ab, wobei entsprechende Flächen der Hakenaufnahme 31 wirksam werden. Um zu verhindern, dass das Bodenbearbeitungswerkzeug seitlich von dem Haken abrutscht, können beidseitig an das Bodenbearbeitungswerkzeug Plattenelemente angesetzt werden, die den Haken seitlich überdecken. Die Plattenelemente können miteinander unter Verwendung einer Schraubaufnahme 32 verschraubt werden.

## Patentansprüche

1. Bodenbearbeitungssystem (1) für eine landwirtschaftliche Bodenbearbeitungsmaschine mit einem Basiselement (2), welches zur Aufnahme eines Sohlenelementes (3) ausgebildet ist, wobei das Sohlenelement (3) mindestens ein Schneidelement (4) aufweist, und einem Injektionselement (5) zum Eintrag von Substanzen in das zu bearbeitende Bodenmaterial, wobei die Bodenbearbeitungselemente (2, 3, 5) lösbar mit einem Trägerelement (6) der Bodenbearbeitungsmaschine verbunden sind, wobei die lösbaren Verbindungen einen Form- und/oder Kraftschluss bilden und wobei die Elemente (2, 3, 5, 6) wenigstens teilweise einen Schutz vor abrasiven Verschleiß zueinander bilden, **dadurch gekennzeichnet, dass** das Sohlenelement (3) eine Ausnehmung (8) aufweist, welche von dem Basiselement (2) und dem Trägerelement (6) form- und kraftschlüssig durchgriffen ist.

2. Bodenbearbeitungssystem (1) nach Anspruch 1, **dadurch gekennzeichnet, dass** das Basiselement (2) auf seiner in Bearbeitungsrichtung des Bodenbearbeitungssystems (1) weisenden Oberfläche wenigstens ein Schutzelement (11) aufweist.

3. Bodenbearbeitungssystem (1) nach einem der Ansprüche 1 oder 2, **dadurch gekennzeichnet, dass** das Basiselement (2) auf seiner entgegengesetzt zur Bearbeitungsrichtung des Bodenbearbeitungssystems (1) weisenden Oberfläche wenigstens einen Vorsprung und/oder wenigstens eine Vertiefung aufweist.

4. Bodenbearbeitungssystem (1) nach einem der Ansprüche 1 bis 3, **dadurch gekennzeichnet, dass** das Injektionselement (5) in seinem zur Bodenoberfläche weisenden Endbereich wenigstens ein Befestigungselement (9) aufweist, welches mit wenigstens einer im Trägerelement (6) angeordneten Aufnahme (10) im form- und/oder kraftschlüssigen Eingriff steht.

5. Bodenbearbeitungssystem (1) nach einem der Ansprüche 1 bis 4, **dadurch gekennzeichnet, dass** auf der zur Bodenoberfläche entgegengesetzt weisenden Oberfläche des Sohlenelements (3) wenigstens ein Schutzelement (12) angeordnet ist.

6. Bodenbearbeitungssystem (1) nach einem der Ansprüche 1 bis 5, **dadurch gekennzeichnet, dass** das Schutzelement (12) mehrteilig und/oder werkstoffeinstückig und für eine symmetrische und/oder asymmetrische Anordnung auf dem Basisteil (6) ausgebildet ist.

7. Bodenbearbeitungssystem (1) nach einem der Ansprüche 1 bis 6, **dadurch gekennzeichnet, dass** im Endbereich des Injektionselementes (5) eine winkelförmiges Leitelement (13) zum Schutz der Injektionsöffnung vor eindringendem Bodenmaterial und homogenen Verteilung einer ausgeleiteten Substanz während des Betriebes des Bodenbearbeitungssystems (1) angeordnet ist.

8. Bodenbearbeitungssystem (1) nach einem der Ansprüche 1, bis 7, **dadurch gekennzeichnet, dass** das Injektionselement (5) mittels einem Schutz- und Stabilisierungselement (14) mit dem Trägerelement (6) verbunden ist.

9. Bodenbearbeitungssystem (1) nach einem der Ansprüche 1 bis 8, **dadurch gekennzeichnet, dass** zwischen dem Injektionselement (5) und dem Trägerelement (6) ein keilförmiges Abstands- und Stabilisierungselement (15) anordenbar ist.

10. Bodenbearbeitungssystem (1) nach einem der Ansprüche 1 bis 9, **dadurch gekennzeichnet, dass** das am Sohlenelement (3) angeordnete Schneidelement (4) mit seinem in entgegen zur Bearbeitungsrichtung und Bodenoberfläche weisenden Ende einen Abstand zur Bodenoberfläche aufweist, welcher gleich, vorzugsweise größer als der Abstand zwischen der im Sohlenelement (3) eintauchenden Oberflächenkante (16) des Basiselementes (2) und der Bodenoberfläche ist.

11. Bodenbearbeitungssystem (1) nach einem der Ansprüche 1 bis 10, **dadurch gekennzeichnet, dass** das Schneidelement (4) mehrteilig ausgebildet ist und in jeder Raumebene mit Bezug auf das Sohlenelement (3) anordenbar ist.

12. Bodenbearbeitungssystem (1) nach einem der Ansprüche 1 bis 11, **dadurch gekennzeichnet, dass** zwischen dem Basiselement (2) und dem Trägerelement (6) ein Zwischenelement (22) anordenbar ist.

13. Bodenbearbeitungssystem (1) nach einem der Ansprüche 1 bis 12, **dadurch gekennzeichnet, dass** das Zwischenelement (22) mittels mindestens einer Ausformung und/oder mindestens einem Formkörper eine lösbare Verbindung zwischen Basiselement (2) und Trägerelement (6) bildet.

14. Bodenbearbeitungssystem (1) nach einem der Ansprüche 1 bis 13, **dadurch gekennzeichnet, dass** am Sohlenelement (3) zwei nach außen gerichtete Flügelelemente (23, 24) lösbar und/oder unlösbar anordenbar sind.

15. Bodenbearbeitungssystem (1) nach einem der Ansprüche 1 bis 14, **dadurch gekennzeichnet, dass** das Basiselement (2) ein oder mehrere Innengewinde aufweist.

16. Bodenbearbeitungssystem (1) nach einem der Ansprüche 1 bis 15, **dadurch gekennzeichnet, dass** das Basiselement (2) eine einteilige oder mehrteilige Form aufweist.

17. Bodenbearbeitungssystem (1) nach einem der Ansprüche 1 bis 16, **dadurch gekennzeichnet, dass** der in Fließrichtung des Bodenmaterials weisende Endbereich des Basiselementes (2) eine hakenförmige Kopplung aufweist.

18. Bodenbearbeitungssystem (1) nach einem der Ansprüche 1 bis 17, **dadurch gekennzeichnet, dass** das Basiselement (2) einen s-förmigen Verlauf aufweist, wobei der in Fließrichtung des Bodenmaterials weisende Endbereich des Basisteils (6) das Trägerelement (6) teilweise umgreift und der in Fließrichtung des Bodenmaterials weisende Anfangsbereich des Basisteils (2) eine Abstützung auf dem Trägerelement (6) bildet.

## Claims

1. A soil-working system (1) for an agricultural soil-working machine having a base element (2), which is designed to receive a sole element (3), the sole element (3) having at least one cutting element (4), and an injection element (5) for introducing substances into the soil material to be worked, wherein the soil-working elements (2, 3, 5) are detachably connected to a carrier element (6) of the soil-working machine, wherein the detachable connections form a form-fit and/or force-fit connection and wherein the elements (2, 3, 5, 6) at least partially provide each other with protection against abrasive wear, **characterised in that**
the sole element (3) has a recess (8) which is penetrated by the base element (2) and the carrier element (6) by a form-fit and/or force-fit manner.

2. The soil-working system (1) according to claim 1, **characterised in that** the base element (2) has at least one protective element (11) on its surface facing in the working direction of the soil-working system (1).

3. The soil-working system (1) according to claim 1 or 2, **characterised in that** the base element (2) has at least one projection and/or at least one depression on its surface facing away from the working direction of the soil-working system (1).

4. The soil-working system (1) according to any one of claims 1 to 3, **characterised in that** the injection element (5) has at least one fastening element (9) in its end region facing the base surface, said fastening element being engaged in a positive and/or frictional manner with at least one receptacle (10) arranged in the carrier element (6).

5. The soil-working system (1) according to any one of claims 1 to 4, **characterised in that** at least one protective element (12) is arranged on the surface of the sole element (3) facing away from the base surface.

6. The soil-working system (1) according to any one of claims 1 to 5, **characterised in that** the protective element (12) is formed in several parts and/or integrally and for a symmetrical and/or asymmetric arrangement on the base part (6).

7. The soil-working system (1) according to any one of claims 1 to 6, **characterized in that** an angular guide element (13) for protecting the injection opening from penetrating soil material and homogeneous distribution of a discharged substance during operation of the soil-working system (1) is arranged in the end region of the injection element (5).

8. The soil-working system (1) according to any one of claims 1, to 7, **characterised in that** the injection element (5) is connected to the carrier element (6) by means of a protection and stabilising element (14).

9. The soil-working system (1) according to any one of claims 1 to 8, **characterised in that** a wedge-shaped spacing and stabilising element (15) can be arranged between the injection element (5) and the carrier element (6).

10. The soil-working system (1) according to any one of claims 1 to 9, **characterised in that** the cutting element (4) arranged on sole element (3) has with its end facing away from the working direction and base surface a distance to the base surface, which is equal to, preferably greater than the distance between the surface edge (16) of the base element (2) immersing into the sole element (3) and the base surface.

11. The soil-working system (1) according to any one of claims 1 to 10, **characterised in that** the cutting element (4) is formed in several parts and can be arranged in any spatial plane with respect to the sole element (3).

12. The soil-working system (1) according to any one of claims 1 to 11, **characterised in that** an intermediate element (22) can be arranged between the base element (2) and the carrier element (6).

13. The soil-working system (1) according to any one of claims 1 to 12, **characterised in that** the intermediate element (22) forms a detachable connection between the base element (2) and carrier element (6) by means of at least one moulding and/or at least one moulded body.

14. The soil-working system (1) according to any one of claims 1 to 13, **characterised in that** two outwardly directed wing elements (23, 24) are detachably and/or non-detachably arranged on the sole element (3).

15. The soil-working system (1) according to any one of claims 1 to 14, **characterised in that** the base element (2) has one or more internal threads.

16. The soil-working system (1) according to any one of claims 1 to 15, **characterised in that** the base element (2) has a single-piece or multi-piece form.

17. The soil-working system (1) according to any one of claims 1 to 16, **characterised in that** the end portion of the base element (2) facing in the flow direction of the soil material has a hook-shaped coupling.

18. The soil-working system (1) according to any one of claims 1 to 17, **characterised in that** the base element (2) has an S-shaped profile, wherein the end portion of the base part (6) facing in the direction of flow of the soil material partially surrounds the support element (6) and the initial region of the base part (2) facing in the direction of flow of the soil material forms a support on the carrier element (6).

## Revendications

1. Système de travail du sol (1) pour une machine agricole de travail du sol comprenant un élément de base (2) conçu pour recevoir un élément de semelle (3), l'élément de semelle (3) présentant au moins un élément de coupe (4) et un élément d'injection (5) pour l'introduction de substances dans le sol à travailler, les éléments de travail du sol (2, 3, 5) étant reliés de manière amovible à un élément de support (6) de la machine de travail du sol, les liaisons amovibles formant une liaison par complémentarité de forme et/ou à force et les éléments (2, 3, 5, 6) assurant entre eux au moins partiellement une protection contre l'usure par abrasion, **caractérisé**
**en ce que** l'élément de semelle (3) présente un évidement (8) qui est traversé, par complémentarité de forme et à force, par l'élément de base (2) et l'élément de support (6).

2. Système de travail du sol (1) selon la revendication 1, **caractérisé en ce que** l'élément de base (2) présente au moins un élément de protection (11) sur sa surface orientée dans la direction de travail du système de travail du sol (1).

3. Système de travail du sol (1) selon l'une quelconque des revendications 1 ou 2, **caractérisé en ce que** l'élément de base (2) présente, sur sa surface orientée à l'opposé de la direction de travail du système de travail du sol (1), au moins une protubérance et/ou au moins un renfoncement.

4. Système de travail du sol (1) selon l'une quelconque des revendications 1 à 3, **caractérisé en ce que** l'élément d'injection (5) présente, dans sa zone d'extrémité orientée vers la surface du sol, au moins un élément de fixation (9) qui est en prise par complémentarité de forme et/ou à force avec au moins une cavité (10) agencée dans l'élément de support (6).

5. Système de travail du sol (1) selon l'une quelconque des revendications 1 à 4, **caractérisé en ce qu'**au moins un élément de protection (12) est disposé sur la surface de l'élément de semelle (3) orientée à l'opposé de la surface du sol.

6. Système de travail du sol (1) selon l'une quelconque des revendications 1 à 5, **caractérisé en ce que** l'élément de protection (12) est conçu en plusieurs parties et/ou d'un seul tenant et pour une disposition symétrique et/ou asymétrique sur la partie de base (6).

7. Système de travail du sol (1) selon l'une quelconque des revendications 1 à 6, **caractérisé en ce que**, dans la région d'extrémité de l'élément d'injection (5), un élément de guidage angulaire (13) est disposé pour protéger l'ouverture d'injection de toute pénétration de matière du sol et répartir de manière homogène une substance évacuée lors du fonctionnement du système de travail du sol (1).

8. Système de travail du sol (1) selon l'une quelconque des revendications 1 à 7, **caractérisé en ce que** l'élément d'injection (5) est relié à l'élément de support (6) par un élément de protection et de stabilisation (14).

9. Système de travail du sol (1) selon l'une quelconque des revendications 1 à 8, **caractérisé en ce qu'**un élément d'espacement et de stabilisation en forme de coin (15) peut être disposé entre l'élément d'injection (5) et l'élément de support (6).

10. Système de travail du sol (1) selon l'une quelconque des revendications 1 à 9, **caractérisé en ce que** l'élément de coupe (4) agencé sur l'élément de semelle (3) avec son extrémité orientée dans la direction opposée à la direction de travail et à la surface du sol, présente un écart par rapport à la surface du sol qui est égal, de préférence supérieur à l'écart entre le bord superficiel (16) pénétrant dans l'élément de semelle (3) de l'élément de base (2) et la surface du sol.

11. Système de travail du sol (1) selon l'une quelconque des revendications 1 à 10, **caractérisé en ce que** l'élément de coupe (4) est conçu en plusieurs parties et peut être disposé dans chaque plan spatial par rapport à l'élément de semelle (3).

12. Système de travail du sol (1) selon l'une quelconque des revendications 1 à 11, **caractérisé en ce qu'**un élément intermédiaire (22) peut être disposé entre l'élément de base (2) et l'élément de support (6).

13. Système de travail du sol (1) selon l'une quelconque des revendications 1 à 12, **caractérisé en ce que** l'élément intermédiaire (22) forme, au moyen d'au moins une formation et/ou d'au moins un corps moulé, une liaison amovible entre l'élément de base (2) et l'élément de support (6).

14. Système de travail du sol (1) selon l'une quelconque des revendications 1 à 13, **caractérisé en ce que**, sur l'élément de semelle (3), deux éléments d'ailette (23, 24) dirigés vers l'extérieur sont disposés de manière amovible et/ou inamovible.

15. Système de travail du sol (1) selon l'une quelconque des revendications 1 à 14, **caractérisé en ce que** l'élément de base (2) présente un ou plusieurs filets internes.

16. Système de travail du sol (1) selon l'une quelconque des revendications 1 à 15, **caractérisé en ce que** l'élément de base (2) présente une forme d'un seul tenant ou en plusieurs parties.

17. Système de travail du sol (1) selon l'une quelconque des revendications 1 à 16, **caractérisé en ce que** la partie d'extrémité de l'élément de base (2) orientée dans la direction d'écoulement de la matière du sol présente un accouplement en forme de crochet.

18. Système de travail du sol (1) selon l'une quelconque des revendications 1 à 17, **caractérisé en ce que** l'élément de base (2) présente un profil en forme de S, la partie d'extrémité de la partie de base (6) orientée dans la direction d'écoulement de la matière du sol venant partiellement en prise autour de l'élément de support (6) et la partie de début de la partie de base (2) orientée dans la direction d'écoulement de la matière du sol formant un appui sur l'élément de support (6).
